# FASCICULE DE BREVET EUROPEEN

(11) **EP 0 946 416 B1**
(45) Date de publication et mention de la délivrance du brevet: **20.02.2002**
(21) Numéro de dépôt: 97911293.5
(22) Date de dépôt: 17.10.1997
(51) Int. Cl.: C01B 39/48, C01B 39/06, B01J 29/70, B01J 29/06

(54) **ZEOLITHE IM-5, SON PROCEDE DE PREPARATION ET SES APPLICATIONS CATALYTIQUES**
ZEOLITH DES IM-5 -TYPS, DESSEN HERSTELLUNG UND KATALYTISCHE VERWENDUNGEN
IM-5 ZEOLITE, METHOD OF PREPARATION AND CATALYTIC APPLICATIONS THEREOF

(30) Priorité: 21.10.1996 FR 9612873
(43) Date de publication de la demande: 06.10.1999
(73) Titulaire: INSTITUT FRANCAIS DU PETROLE, 92500 Rueil Malmaison (FR)
(72) Inventeur: BENAZZI, Eric, F-78400 Chatou (FR); GUTH, Jean-Louis, F-68200 Mulhouse (FR); ROULEAU, Loic, F-69600 Oullins (FR)
(86) Numéro de dépôt international: FR9701868
(87) Numéro de publication internationale: WO9817581

(56) Documents cités:
- EP-A- 0 135 658
- US-A- 4 941 963

## Description

La présente invention concerne une nouvelle zéolithe appelée ci-après zéolithe IM-5, son procédé de préparation, tout catalyseur comprenant ladite zéolithe et tout procédé catalytique utilisant ledit catalyseur.

En raison de leurs propriétés de sélectivité géométrique et d'échange ionique, les zéolithes sont utilisées industriellement sur une large échelle, aussi bien en adsorption (par exemple séchage de gaz, séparation de composés aromatiques etc...) qu'en catalyse (par exemple craquage catalytique, hydrocraquage, isomérisation, oligomérisation, etc...)

Bien que de nombreuses zéolithes du type aluminosilicate existent dans la nature, la recherche de nouveaux tamis moléculaires microporeux a conduit au cours des dermières années à la synthèse d'une grande variété de ces tamis moléculaires, et donc aussi à une grande variété au niveau d'aluminosilicates à structure zéolithique, de par leur composition chimique, le diamètre des pores qu'ils contiennent , la forme et la géométrie de leur système microporeux.

On peut citer parmi les zéolithes synthétisées depuis une quarantaine d'années, un certain nombre de solides qui ont permis de réaliser des progrès significatifs dans les domaines de l'adsorption et de la catalyse. Parmi celles-ci, on peut citer la zéolithe Y (US-A-3.130.007), la zéolithe ZSM-5 (US-A-3.702.886). Plus récemment, le nombre de nouveaux tamis moléculaires, recouvrant les zéolithes, synthétisés chaque année est en progression constante. Pour avoir une description plus complète des différents tamis moléculaires découverts, on peut utilement se référer à l'ouvrage suivant "Atlas of Zeolites Structure Types", W.M. Meier and D.H. Olson, Third revised Edition, 1992, Butterworth-Heinemann.On peut citer la zéolithe NU-87 (US-A-5.178.748), la zéolithe MCM-22 (US-A-4.954.325) ou bien encore le gallophosphate (clovérite) de type CLO, (US-A-5.420.279). On peut encore citer la zéolithe NU-88 de la demande de brevet français 96/10.507, dont certains passages sont reproduits ci-après.

La zéolithe NU-88 est caractérisée par :
-i) une composition chimique exprimée sur une base anhydre, en termes de rapports molaires d'oxydes, par la formule :
100 XO₂ , m Y₂O₃, p R_{2/n}O,
où
m est égal ou inférieur à 10,
p est compris entre 0 (exclu) et 20,
R représente un ou plusieurs cations de valence n,
X est le silicium et/ou le germanium, de préférence le silicium,
Y est choisi dans le groupe formé par les éléments suivants : l'aluminium, le fer, le gallium, le bore, le titane, le vanadium, le zirconium, le molybdène, l'arsenic, l'antimoine, le chrome et le manganèse, de préférence Y est l'aluminium, et

-ii) le fait qu'elle présente, sous forme brute de synthèse, un diagramme de diffraction X comportant les résultats présentés dans le tableau A suivant :

**Tableau A :**

| diffraction des rayons X de la zéolithe NU-88 (brute de synthèse) | |
|---|---|
| dₕₖₗ (10⁻¹⁰m) | I/Iₘₐₓ |
| 12,1±0,35 | F ou TF(1) |
| 11,0±0,30 | F (1) |
| 9,88±0,25 | m (1) |
| 6,17±0,15 | f |
| 3,97±0,09 | TF (2) |
| 3,90±0,08 | TF (2) |
| 3,80±0,08 | f (2) |
| 3,66±0,07 | tf |
| 3,52±0,07 | tf |
| 3,27±0,07 | tf |
| 3,09±0,06 | f |
| 2,91±0,06 | f |
| 2,68±0,06 | tf |
| 2,49±0,05 | tf |
| 2,20±0,05 | tf |
| 2,059±0,05 | f |
| 1,729±0,04 | tf |

| | |
|---|---|
| (1) Ces pics ne sont pas résolus et font partie d'un même massif. | |
| (2) Ces pics ne sont pas résolus et font partie du même massif. | |

La zéolithe NU-88 sous forme hydrogène, désignée par H-NU-88, produite par calcination et/ou échange d'ion a un diagramme de diffraction X comportant les résultats présentés dans le tableau B suivant :

**Tableau B :**

| diffraction des rayons X de la zéolithe NU-88 (forme hydrogène) | |
|---|---|
| dₕₖₗ (10⁻¹⁰m) | l/lₘₐₓ |
| 12,1±0,35 | TF(1) |
| 11,0±0,30 | F ou TF (1) |
| 9,92±0,25 | f ou m (1) |
| 8,83±0,20 | tf |
| 6,17±0,15 | f |
| 3,99±0,10 | F ou TF (2) |
| 3,91±0,08 | TF (2) |
| 3,79±0,08 | f ou m (2) |
| 3,67±0,07 | tf |
| 3,52±0,07 | tf |
| 3,09±0,06 | f |
| 2,90±0,06 | f |
| 2,48±0,05 | f |
| 2,065±0,05 | f |
| 1,885±0,04 | tf |
| 1,733±0,04 | tf |

| | |
|---|---|
| (1) Ces pics ne sont pas résolus et font partie d'un même massif. | |
| (2) Ces pics ne sont pas résolus et font partie du même massif. | |

Ces diagrammes sont obtenus à l'aide d'un diffractomètre en utilisant la méthode classique des poudres avec le rayonnement Kα du cuivre Cu K alpha. A partir de la position des pics de diffraction représentée par l'angle 2θ, on calcule, par la relation de Bragg, les équidistances réticulaires dₕₖₗ caractéristiques de l'échantillon. Le calcul de l'intensité se fait sur la base d'une échelle d'intensité relative sur laquelle on attribue une valeur de 100 à la raie présentant l'intensité la plus forte sur le diagramme de diffraction X, et alors :
très faible (tf) signifie inférieure à 10,
faible (f) signifie inférieure à 20,
moyenne (m) signifie comprise entre 20 et 40,
forte (F) signifie comprise entre 40 et 60,
très forte (TF) signifie supérieure à 60.

Les diffractogrammes X à partir desquels ces données ont été obtenues (espacement d et intensités relatives) sont caractérisés par de larges réflexions avec de nombreux pics formant des épaulements sur d'autres pics d'intensité supérieure. Il peut arriver que certains épaulements, ou tous les épaulements, ne soient pas résolus. Ceci peut se produire pour des échantillons faiblement cristallins ou des échantillons au sein desquels les cristaux sont suffisamment petits pour donner un élargissement significatif des rayons X. Cela peut également être le cas lorsque l'équipement ou les conditions mis en oeuvre pour obtenir le diagramme diffèrent de ceux utilisés ici.

On estime que la zéolithe Nu-88 possède une nouvelle structure de base ou topologie qui est caractérisée par son diagramme de diffraction X. La zéolithe NU-88 sous sa "forme brute de synthèse" possède sensiblement les caractéristiques obtenues par diffraction X, présentées dans le tableau A, et se distingue ainsi des zéolithes connues.

Dans le cadre de la définition de la composition chimique donnée ci-dessus, m est généralement compris entre 0,1 et 10, de préférence entre 0,2 et 9, et de façon encore plus préférée entre 0,6 et 8 ; il apparaît que la zéolithe NU-88 s'obtient généralement le plus aisément sous une forme très pure lorsque m est compris entre 0,6 et 8.

La présente invention, elle, concerne donc une nouvelle structure zéolithique, nommée IM-5, de composition chimique, exprimée sur une base anhydre, en termes de rapports molaires d'oxydes, par la formule :
100 XO₂, m Y₂O₃, p R_{2/n}O,
où
m est égal ou inférieur à 10,
p est compris entre 0 (exclu) et 20,
R représente un ou plusieurs cations de valence n,
X est le silicium et/ou le germanium, de préférence le silicium,
Y est choisi dans le groupe formé par les éléments suivants : l'aluminium, le fer, le gallium, le bore, le titane, de préférence Y est l'aluminium, et
caractérisée par le fait qu'elle présente, sous forme brute de synthèse, un diagramme de diffraction X comportant les raies présentées dans le tableau 1.

L'invention concerne aussi la zéolithe IM-5 dans sa forme hydrogène, désignée H-IM-5, obtenue par calcination(s) et/ou échange(s) ionique(s) comme explicité ci-après. La zéolithe H-IM-5 présente un diagramme de diffraction des rayons X comportant les raies présentées dans le tableau 2.

**Tableau 1 :**

| Tableau de diffraction des rayons X de la zéolithe IM-5 brute de synthèse | |
|---|---|
| dₕₖₗ (Å) | I/Iₘₐₓ |
| 11,8±0,35 | F à TF(1) |
| 11,5±0,30 | F à TF(1) |
| 11,25±0,30 | Fà TF(1) |
| 9,95±0,20 | m à F |
| 9,50±0,15 | m à F |
| 7,08±0,12 | f à m |
| 6,04±0,10 | tf à f |
| 5,75±0,10 | f |
| 5,65±0,10 | f |
| 5,50±0,10 | tf |
| 5,35±0,10 | tf |
| 5,03±0,09 | tf |
| 4,72±0,08 | f à m |
| 4,55±0,07 | f |
| 4,26±0,07 | tf |
| 3,92±0,07 | F à TF (2) |
| 3,94±0,07 | TF (2) |
| 3,85±0,05 | TF (2) |
| 3,78±0,04 | F à TF (2) |
| 3,67±0,04 | m à F |
| 3,55+0,03 | m à F |
| 3,37±0,02 | f |
| 3,30±0,015 | f |
| 3,099±0,012 | f à m |
| 2,970±0,007 | tf à f |
| 2,815±0,005 | tf |
| 2,720±0,005 | tf |

| | |
|---|---|
| (1) Raies faisant partie du même massif, | |
| (2) Raies faisant partie du même massif. | |

**Tableau 2 :**

| Tableau de diffraction des rayons X de la zéolithe IM-5 sous forme H, H-IM-5, obtenue par calcination | |
|---|---|
| dₕₖₗ (Å) | l/lₘₐₓ |
| 11,8±0,30 | F à TF(1) |
| 11,45±0,25 | TF(1) |
| 11,20±0,20 | F à TF(1) |
| 9,90±0,15 | m à F |
| 9,50±0,15 | m à F |
| 7,06±0,12 | f à m |
| 6,01±0,10 | tf à f |
| 5,70±0,10 | f |
| 5,30±0,10 | tf |
| 5,03±0,09 | tf |
| 4,71±0,08 | f |
| 4,25±0,07 | tf |
| 3,87±0,07 | m à F (2) |
| 3,81±0,05 | m à F (2) |
| 3,76±0,04 | m à F (2) |
| 3,67±0,04 | f à m |
| 3,54±0,04 | m à F |
| 3,37±0,03 | f |
| 3,316±0,015 | f |
| 3,103±0,012 | f |
| 3,080±0,010 | f à m |
| 2,950±0,010 | tf à f |
| 2,880±0,007 | tf |
| 2,790±0,005 | tf |
| 2,590±0,005 | tf |

| | |
|---|---|
| (1) Raies faisant partie du même massif, | |
| (2) Raies faisant partie du même massif. | |

Ces diagrammes sont obtenus à l'aide d'un diffractomètre en utilisant la méthode classique des poudres avec le rayonnement Kα du cuivre. A partir de la position des pics de diffraction représentée par l'angle 2θ, on calcule, par la relation de Bragg, les équidistances réticulaires dₕₖₗ caractéristiques de l'échantillon. Le calcul de l'intensité se fait sur la base d'une échelle d'intensité relative sur laquelle on attribue une valeur de 100 à la raie présentant l'intensité la plus forte sur le diagramme de diffraction X :
très faible (tf) signifie inférieure à10,
faible (f) signifie inférieure à 20,
moyenne (m) signifie comprise entre 20 et 40,
forte (F) signifie comprise entre 40 et 60,
très forte (TF) signifie supérieure à 60.

Les diffractogrammes X à partir desquels ces données ont été obtenues (espacement d et intensités relatives) sont caractérisés par de larges réflexions avec de nombreux pics formant des épaulements sur d'autres pics d'intensité supérieure. Il peut arriver que certains épaulements, ou tous les épaulements, ne soient pas résolus. Ceci peut se produire pour des échantillons faiblement cristallins ou des échantillons au sein desquels les cristaux sont suffisamment petits pour donner un élargissement significatif des rayons X. Cela peut également être le cas lorsque l'équipement ou les conditions mis en oeuvre pour obtenir le diagramme diffèrent de ceux utilisés ici.

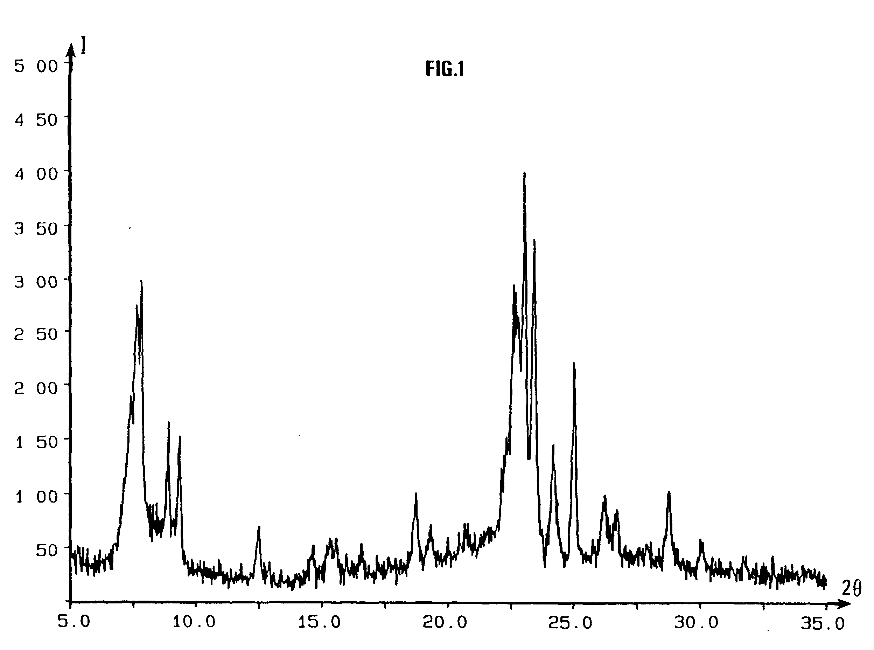

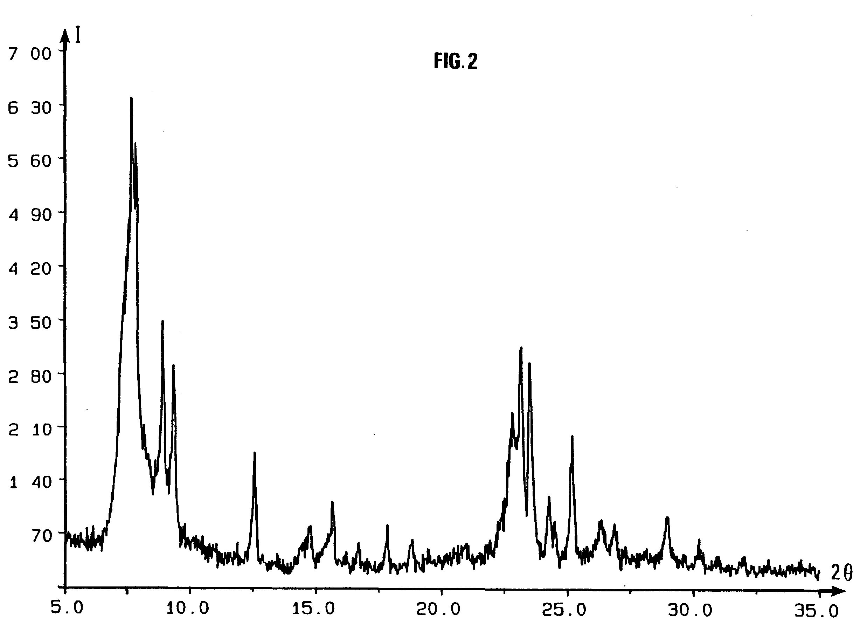

On estime que la zéolithe IM-5 possède une nouvelle structure de base ou topologie qui est caractérisée par son diagramme de diffraction X. La zéolithe IM-5 sous sa "forme brute de synthèse" possède sensiblement les caractéristiques obtenues par diffraction X, présentées dans le tableau 1 (voir aussi un exemple de diffractogramme en figure 1). et se distingue ainsi des zéolithes connues. De même la zéolithe H-IM5, obtenue par calcination et/ou échanges ioniques, possède sensiblement les caractéristiques présentées dans le tableau 2 (voir aussi un exemple de diffractogramme en figure 2). L'objet de l'invention comprend aussi toute zéolithe de même type structural que celui de la zéolithe IM-5.

Dans le cadre de la définition de la composition chimique donnée ci-dessus. m est généralement compris entre 0,1 et 10, de préférence entre 0,3 et 9, et de façon encore plus préférée entre 0,5 et 8 ; il apparaît que la zéolithe IM-5 s'obtient généralement le plus aisément sous une forme très pure lorsque m est compris entre 0,8 et 8.

Cette définition englobe également la zéolithe IM-5 sous sa "forme brute de synthèse", ainsi que des formes obtenues par déshydratation et/ou calcination(s) et/ou échange(s) d'ions. L'expression "sous sa forme brute de synthèse" désigne le produit obtenu par synthèse et par lavage avec ou sans séchage ou déshydratation. Sous sa "forme brute de synthèse", la zéolithe IM-5 peut comporter un cation de métal M, qui est un alcalin, notamment du sodium, et/ou de l'ammonium, et elle peut comporter des cations organiques azotés tels que ceux décrits ci-après ou leurs produits de décomposition, ou encore leurs précurseurs. Ces cations organiques azotés sont désignés ici par la lettre Q, qui inclut aussi les produits de décomposition et les précurseurs desdits cations organiques azotés.

Ainsi, la zéolithe IM-5, sous sa forme "brute de synthèse" (non calcinée), est de composition chimique, exprimée sur une base anhydre, en termes de rapports molaires d'oxydes, par la formule
100 XO₂ : inférieur ou égal à 10 Y₂O₃ : inférieur ou égal à 10 Q : inférieur ou égal à 10 M₂O,
où
M est au moins un cation de métal alcalin (groupe IA de la Classification Périodique des Eléments) et/ou l'ammonium,
Q est au moins un cation organique azoté ou un précurseur de cation organique azoté ou un produit de décomposition de cation organique azoté,
   au moins un composé de type M ou Q étant présent,
X est le silicium et/ou le germanium, de préférence le silicium,
Y est choisi dans le groupe formé par les éléments suivants : l'aluminium, le fer, le gallium, le bore, le titane, de préférence Y est l'aluminium, et
caractérisée par le fait qu'elle présente, sous forme brute de synthèse. un diagramme de diffraction X comportant les résultats présentés dans le tableau 1.

Les compositions indiquées ci-dessus pour la zéolithe IM-5 sont données sur une base anhydre, bien que la zéolithe IM-5 sous sa "forme brute de synthèse" et les formes activées de la zéolithe IM-5, c'est-à-dire résultant de calcination(s) et/ou d'échange(s) d'ions, puissent contenir de l'eau. La teneur molaire en H₂O de telles formes, y compris la zéolithe IM-5 sous sa "forme brute de synthèse", varie selon les conditions dans lesquelles elles ont été préparées et conservées après synthèse ou activation. Les quantités molaires d'eau contenue dans ces formes sont typiquement comprises entre 0 et 100 % XO₂.

Les formes calcinées de la zéolithe IM-5 ne contiennent pas de composé organique azoté, ou en quantité moindre que la "forme brute de synthèse", dans la mesure où la substance organique est éliminée en majeure partie, généralement par un traitement thermique consistant à brûler la substance organique en présence d'air, l'ion hydrogène (H⁺) formant alors l'autre cation.

Ainsi la zéolithe IM-5, sous sa forme calcinée, est de composition chimique exprimée sur une base anhydre, en termes de rapports molaires d'oxydes, par la formule
100 XO₂: inférieur ou égal à 10 Y₂O₃ : compris entre 0 (exclu) et 10 M₂O,
où
M est au moins un cation de métal alcalin (groupe IA de la Classification Périodique des Eléments) et/ou l'ammonium et/ou l'hydrogène,
X est le silicium et/ou le germanium, de préférence le silicium,
Y est choisi dans le groupe formé par les éléments suivants : l'aluminium, le fer, le gallium, le bore, le titane, de préférence Y est l'aluminium, et
est caractérisée par le fait qu'elle présente, sous forme brute de synthèse, un diagramme de diffraction X comportant les résultats présentés dans le tableau 2.

Parmi les formes de zéolithe IM-5 obtenues par échange(s) d'ions, la forme ammonium (NH₄⁺) est importante car elle peut être facilement convertie sous la forme hydrogène par calcination. La forme hydrogène et les formes contenant des métaux introduits par échange d'ions sont décrites ci-dessous. Dans certains cas, le fait de soumettre la zéolithe selon l'invention à l'action d'un acide peut donner lieu à l'élimination partielle ou totale d'un élément de base tel que l'aluminium, ainsi que la génération de forme hydrogène. Ceci peut constituer un moyen de modifier la composition de la substance de la zéolithe après qu'elle a été synthétisée.

L'invention permet également d'obtenir la zéolithe IM-5 sous forme hydrogène, appelée H-IM-5, produite par calcination(s) et/ou par échange(s) d'ions comme décrit ci-après.

Un des objets de l'invention est donc la zéolithe IM-5 au moins en partie sous forme H⁺ (telle que définie ci-dessus) ou NH₄⁺ ou métallique, ledit métal étant choisi dans le groupe formé par les groupes IA, IB, IIA, IIB, IIIA, IIIB (y compris les terres rares), VIII, Sn, Pb et Si, de préférence au moins en partie sous forme H⁺ ou au moins en partie sous forme métallique. Une telle zéolithe présente généralement un diagramme de diffraction X comportant les résultats présentés dans le tableau I.

L'invention concerne également une méthode de préparation de la zéolithe IM-5 dans laquelle on fait réagir un mélange aqueux comportant au moins une source d'au moins un oxyde XO₂, au moins une source d'au moins un oxyde Y₂O₃, éventuellement au moins une source d'au moins un oxyde M₂O et au moins un cation organique Q azoté, ou un précurseur de cation organique azoté ou un produit de décomposition de cation organique azoté et au moins un germe cristallin sélectionné dans le groupe constitué par le germe de la zéolithe NU-88 et le germe de la zéolithe IM-5, le mélange présentant la composition molaire suivante :
XO₂/Y₂O₃ au moins 10, de préférence de 15 à 55, de préférence encore de 25 à 45
(R1/n)OH/XO₂ de 0,01 à 2, de préférence de 0,05 à 1, de préférence encore de 0.10 à 0.75, de manière très préférée entre 0,4 et 0,75,
H₂O/XO₂ de 1 à 400, de préférence de 10 à 200, de préférence encore de 20 à 70,
Q/XO₂ de 0,01 à 1, de préférence de 0,02 à 1, de préférence encore de 0,05 à 0,4
L_{q}Z/XO₂ de 0 à 4, de préférence de 0 à 1, de préférence encore de 0 à 0,25,
où
X est le silicium et/ou le germanium, de préférence le silicium,
Y est choisi dans le groupe formé par les éléments suivants : aluminium, fer, bore, titane et gallium, de préférence Y est l'aluminium,
R est un cation de valence n pouvant comporter un M (un cation de métal alcalin et/ou de l'ammonium), et/ou un Q (un cation organique azoté ou un précurseur de celui-ci ou un produit de décomposition de celui-ci)
L_{q}Z est un sel, Z étant un anion de valence q et L un ion de métal alcalin ou ammonium qui peut être similaire à M ou un mélange de M et d'un autre ion de métal alcalin ou un ion ammonium nécessaire pour équilibrer l'anion Z, Z pouvant comporter un radical acide ajouté par exemple sous la forme d'un sel de L ou d'un sel d'aluminium.

Dans certains cas, il peut être avantageux d'ajouter un sel L_{q}Z. Ainsi un procédé de préparation préféré est tel que le milieu aqueux comprend dudit sel. On peut citer à titre d'exemple pour Z des radicaux acides forts tels que du bromure, du chlorure, de l'iodure, du sulphate, du phosphate ou du nitrate, ou des radicaux acides faibles tels que les radicaux acides organiques, par exemple du citrate ou de l'acétate. Bien que le L_{q}Z ne soit pas essentiel, il peut accélérer la cristallisation de la zéolithe IM-5 à partir du mélange réactionnel et il peut également affecter la taille et la forme des cristaux constituant la zéolithe IM-5. Dans tous les cas, la réaction se poursuit jusqu'à obtention de la cristallisation.

Selon l'invention, de préférence, Q est un cation, le pentane-1,5-bis(méthylpyrrolidinium) (n=5) et l'hexane-1,6 bis(méthylpyrrolidinium) (n=6), de formule générale : 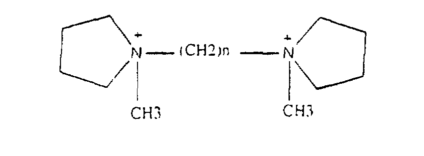 ou un de ses produits de décomposition ou un de ses précurseurs. La source de cation organique, peuvent être par exemple les sels de chlorure de bromure ou d'hydroxyde. Donc, dans cette formule n est égal à 5 ou 6.

M et/ou Q peuvent être ajoutés sous forme d'hydroxydes ou de sels d'acides minéraux à condition que le rapport (R1/n)OH/XO2 soit respecté.

De telles substances peuvent être employées sous forme de mélanges simples, ou elles peuvent être préchauffées ensemble dans le réacteur, de préférence en solution, avant de leur ajouter les autres réactifs nécessaires à la synthèse de la zéolithe IM-5.

Le cation M utilisé de préférence est un métal alcalin, notamment du sodium, XO₂ étant de préférence de la silice (SiO₂) et l'oxyde Y₂O₃ étant de préférence de l'alumine (Al₂O₃).

Dans le cas préféré où X est le silicium, la source de silice peut être l'une quelconque de celles couramment utilisées dans la synthèse des zéolithes, par exemple de la silice solide en poudre, de l'acide silicique, de la silice colloïdale ou de la silice dissoute. Parmi les silices en poudre, on peut utiliser les silices précipitées, notamment celles obtenues par précipitation à partir d'une solution de silicate de métal alcalin, telle que celle appelée "KS 300" fabriquée par AKZO, et des produits similaires, des silices aérosiles, des silices pyrogénées, par exemple du "CAB-O-SIL" et des gels de silice dans des teneurs appropriées pour être utilisées dans les pigments de renforçage ("reinforcing" en anglais) destinés au caoutchouc et au caoutchouc siliconé. On peut utiliser des silices colloïdales présentant différentes tailles de particules, par exemple de diamètre équivalent moyen compris entre 10 et 15 m ou entre 40 et 50 m telles que celles commercialisées sous les marques déposées "LUDOX", "NALCOAG" et "SYTON". Les silices dissoutes qui peuvent être employées comprennent également les silicates au verre soluble disponibles dans le commerce, contenant 0,5 à 6,0, notamment 2,0 à 4,0 moles de SiO₂ par mole d'oxyde de métal alcalin, des silicates de métaux alcalins "actifs" tels que définis dans le brevet britannique GB-A-1.193.254, et des silicates obtenus par dissolution de silice dans un hydroxyde de métal alcalin ou un hydroxyde d'ammonium quaternaire, ou encore un mélange de ceux-ci.

Dans le cas préféré où Y est l'aluminium, la source d'alumine est de préférence de l'aluminate de sodium, ou un sel d'aluminium, par exemple du chlorure, du nitrate ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Certaines ou l'ensemble des sources d'alumine et de silice peuvent éventuellement être ajoutées sous forme d'aluminosilicate.

On fait généralement réagir le mélange réactionnel sous une pression de réaction autogène, éventuellement en ajoutant du gaz, par exemple de l'azote, à une température comprise entre 85°C et 200°C, de préférence entre 120°C et 180°C, et de manière encore préférentielle à une température qui ne dépasse pas 165°C, jusqu'à la formation des cristaux de zéolithe IM-5, ce temps variant généralement entre 1 heure et plusieurs mois en fonction de la composition du réactif et de la température de service. La mise en réaction s'effectue généralement sous agitation ou en absence d'agitation, de préférence en l'absence d'agitation.

Les germes cristallins sont généralement ajoutés dans une proportion comprise entre 0,01 et 10 % du poids de silice utilisée dans le mélange réactionnel.

A la fin de la réaction, la phase solide est recueillie dans un filtre et lavée: elle est ensuite prête pour des étapes ultérieures telles que le séchage, la déshydratation et la calcination et/ou l'échange d'ions.

Si le produit de la réaction contient des ions de métaux alcalins, ceux-ci doivent être éliminés au moins en partie en vue de la préparation de la forme hydrogène de la zéolithe IM-5, au moyen d'au moins un échange d'ions avec un acide, notamment un acide minéral tel que l'acide chlorhydrique et/ou à l'aide du composé d'ammonium obtenu par échange d'ions avec une solution d'un sel d'ammonium tel que du chlorure d'ammonium. L'échange d'ions peut être effectue au moyen d'une mise en suspension épaisse, à une ou plusieurs reprises, dans la solution d'échange d'ions. La zéolithe est généralement calcinée avant l'échange d'ions afin d'éliminer toute substance organique absorbée dans la mesure où l'échange d'ions s'en trouve facilité. Toutes les conditions opératoires d'un tel échange ionique sont connues de l'homme du métier.

D'une manière générale, on peut remplacer le(s) cation(s) de la zéolithe IM-5 par tout cation ou tous cations de métaux, notamment ceux des groupes IA, IB, IIA, IIB, IIIA, IIIB (y compris les terres rares) et VIII (y compris les métaux nobles) de la classification périodique des éléments, et par l'étain, le plomb et le bismuth. L'échange s'effectue normalement avec une solution contenant un sel du cation aporoprié, de la manière connue de l'homme du métier.

L'invention concerne également la composition d'un catalyseur contenant la zéolithe IM-5 Ainsi un des objets de l'invention est un catalyseur comprenant une zéolithe IM-5 telle que décrite précédemment ou préparée selon le procédé de préparation décrit précédemment. L'invention concerne également un catalyseur qui comprend une telle zéolithe IM-5, et qui comprend en outre au moins un liant ou au moins un support ou au moins une autre zéolithe ou au moins un métal choisi dans le groupe formé par les éléments Cu, Ag, Ga, Mg, Ca, Sr. Zn, Cd. B, Al, Sn, Pb, V, P, Sb, Cr, Mo, W. Mn, Re, Fe, Co, Ni, Pt, Pd, Re et Rh.

Dans les catalyseurs selon l'invention, XO₂ est de préférence de la silice et Y₂O₃ est de préférence de l'alumine. De tels catalyseurs peuvent être utilisés dans un grand nombre de procédés catalytiques et avec une large gamme de charges d'alimentation.

Les formes de zéolithe IM-5 utiles en catalyse comprennent généralement les formes hydrogène et ammonium préparées selon les méthodes décrites ci-avant. Mais les catalyseurs selon l'invention comportant de la zéolithe IM-5 peuvent également contenir un ou plusieurs éléments, notamment des métaux ou leurs cations, ou des composés de ces éléments, notamment des oxydes de métaux. Ces catalyseurs peuvent être préparés par échange d'ions ou par imprégnation de la zéolithe IM-5 avec ledit élément, cation ou composé, ou avec un précurseur approprié dudit cation ou composé. Un tel échange d'ions ou une telle imprégnation peuvent être réalisés sur la zéolithe IM-5 au moins en partie, de préférence pratiquement totalement sous sa "forme brute de synthèse", calcinée ou non, sous forme hydrogène et/ou sous forme ammonium et/ou sous toute autre forme échangée (métallique ou non).

Dans les cas où une forme de zéolithe IM-5 contenant un métal est préparée par échange d'ions, il peut être souhaitable d'effectuer un échange complet dudit métal, ce qui signifie que sensiblement l'ensemble des sites échangeables est occupé par ledit métal. De telles formes peuvent être particulièrement utiles dans des procédés de séparation. Dans la plupart des cas cependant, il est préférable de n'effectuer qu'un échange partiel du métal, les sites restants étant occupés par un autre cation, notamment les cations hydrogène ou ammonium. Dans certains cas, il peut être souhaitable d'introduire deux cations métalliques ou plus par échange d'ions.

Dans les cas où la zéolithe IM-5 est imprégnée avec un composé métallique pour former un catalyseur, le composé métallique peut être ajouté dans une proportion appropriée, mais une proportion maximum de 20 % en poids est généralement suffisante pour la plupart des applications; pour certaines applications, on ne dépasse généralement pas 10 % en poids, et des quantités allant jusqu'à 5 % sont souvent appropriées. L'imprégnation peut être effectuée par toute méthode appropriée connue dans le cadre de la préparation des catalyseurs.

Les formes à échange de métaux ou les formes dans lesquelles un composé métallique a été imprègne peuvent être utilisées telles quelles ou traitées en vue de produire un dérivé actif. Les traitements comprennent la réduction, par exemple dans une atmosphère comportant de l'hydrogène, afin de produire un métal ou d'autres formes réduites. Ces traitements peuvent être réalisés à un stade approprié de la préparation du catalyseur ou ils peuvent également être aisément réalisés dans le réacteur catalytique.

Les compositions catalytiques comprenant la zéolithe IM-5 peuvent être associées, si on le souhaite, à une matrice minérale qui peut être soit inerte, soit active sur le plan catalytique. La matrice peut être utilisée seulement comme liant pour maintenir les particules de zéolithe ensemble, éventuellement sous une forme particulière, par exemple sous forme de pastille ou de produit d'extrusion, ou bien elle peut fonctionner comme un diluant inerte, par exemple pour contrôler l'activité par unité de poids de catalyseur. Lorsque la matrice minérale ou le diluant présentent eux-mêmes une activité catalytique, ils peuvent former ainsi une partie efficace de la composition catalytique zéolithe-matrice. Les matrices minérales et les diluants appropriés comprennent des substances utilisées de manière classique comme supports de catalyseur, telles que la silice, les différentes formes d'alumine, des argiles telles que les bentonites, les montmorillonites, la sépiolite, l'attapulgite, de la terre à foulon et des matières poreuses synthétiques telles que silice-alumine, silice-zircone, silice-thorine, silice-glucine ou silice-dioxyde de titane. Des combinaisons de matrices peuvent être envisagées dans le cadre de la présente invention, notamment des combinaisons de matrices inertes et de matrices présentant une activité catalytique.

Lorsque la zéolithe IM-5 est associée à une substance matricielle minérale ou à une pluralité de telles substances, la proportion de substance(s) matricielle(s) dans la composition totale s'élève généralement jusqu'à environ 90 % en poids, de préférence jusqu'à 50 % en poids et de manière encore préférentielle jusqu'à 30 % en poids.

Pour certaines applications, on peut utiliser une autre zéolithe ou tamis moléculaire conjointement avec la zéolithe IM-5 pour former un catalyseur. Une telle combinaison peut être employée telle quelle ou associée à l'une ou plusieurs des substances matricielles décrites ciavant. On peut citer, à titre d'exemple particulier de la mise en oeuvre d'une telle composition, son utilisation comme additif de catalyseur pour craquage catalytique fluide, auquel cas la zéolithe IM-5 est de préférence utilisée dans une proportion de 0,5 à 5 % en poids de catalyseur total.

Pour d'autres applications, la zéolithe IM-5 peut être combinée avec un autre catalyseur tel que du platine sur de l'alumine.

Toute méthode appropriée pour mélanger la zéolithe IM-5 avec une matrice organique et/ou une autre zéolithe peut être mise en oeuvre, notamment celle adaptée à la forme finale sous laquelle le catalyseur est utilisé, par exemple produit d'extrusion, pastille ou granulé.

Si l'on utilise des zéolithes IM-5 pour former un catalyseur conjointement avec un composant métallique (par exemple un composant d'hydrogénation/ déshydrogénation ou un autre métal ayant une activité catalytique) en plus de la matrice minérale, le composant métallique peut être échangé ou imprégné dans la zéolithe IM-5 elle-même avant d'ajouter la substance matricielle, ou dans la composition zéolithe-matrice. Pour certaines applications, il peut être avantageux d'ajouter le composant métallique à la totalité ou à une partie de la substance matricielle avant de mélanger cette dernière avec la zéolithe IM-5.

Une large gamme de catalyseurs de conversion d'hydrocarbures comportant la zéolithe IM-5 peut être préparée par échange d'ions ou par imprégnation de la zéolithe avec un ou plusieurs cations ou oxydes dérivés d'éléments parmi lesquels : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Re et Rh.

Au cas où les catalyseurs comportant la zéolithe IM-5 contiennent un ou plusieurs composants d'hydrogénation/déshydrogénation, tels que les métaux Ni, Co, Pt, Pd, Re et Rh, ces composants peuvent être introduits par échange d'ions ou par imprégnation d'un composé approprié de ce métal.

Les compositions catalytiques comportant la zéolithe IM-5 peuvent trouver leur application dans des réactions comprenant des hydrocarbures aliphatiques saturés et insaturés, des hydrocarbures aromatiques, des composés organiques oxygénés et des composés organiques contenant de l'azote et/ou du soufre, ainsi que des composés organiques contenant d'autres groupes fonctionnels.

Un des objets de l'invention concerne donc également tout procédé catalytique tel que la zéolithe IM-5 est comprise dans le catalyseur. D'une manière générale, les compositions de catalyseurs contenant la zéolithe IM-5 peuvent être utilisées efficacement dans des réactions comprenant une isomérisation, une transalkylation et une dismutation, une alkylation et une désalkylation, une déshydratation et une hydratation, une oligomérisation et une polymérisation, une cyclisation, une aromatisation, un craquage, une hydrogénation et une déshydrogénation, une oxydation, une halogénation, une synthèse d'amines, une hydrodesulfuration et une hydrodénitrification, d'élimination catalytique des oxydes d'azote (soit, de préférence, par réduction, généralement par des composés azotés ou par des hydrocarbures, soit par décomposition), la formation d'éther et la conversion d'hydrocarbures et la synthèse de composés organiques en général.

Les procédés mentionnés ci-dessus peuvent être effectués soit en phase liquide, soit en phase vapeur, dans des conditions choisies pour être les plus appropriées pour chaque réaction individuelle. Par exemple, les réactions effectuées en phase vapeur peuvent comporter la mise en oeuvre d'opérations à lit fluide, à lit fixe ou à lit mobile. Des diluants de traitement peuvent être utilisés si nécessaire. Selon le procédé mis en oeuvre, les diluants appropriés peuvent être des gaz inertes (tels que de l'azote ou de l'hélium), des hydrocarbures, du dioxyde de carbone, de l'eau ou de l'hydrogène. Le diluant peut être inerte ou bien il peut exercer une action chimique. Il peut être avantageux, notamment si l'on utilise de l'hydrogène. d'inclure un composant métallique, tel qu'un composant d'hydrogénation/ déshydrogénation, par exemple ou ou plusieurs des métaux Ni, Co, Pt, Pd, Re ou Rh dans la composition du catalyseur.

La présente invention concerne également tout procédé de conversion d'hydrocarbures au cours duquel on met en contact un alkylbenzène ou un mélange d'alkylbenzènes dans des conditions d'isomérisation, en phase vapeur ou liquide, avec un catalyseur contenant de la zéolithe IM-5.

Les réactions d'isomérisation pour lesquelles les catalyseurs contenant de la zéolithe IM-5 sont particulièrement utiles sont celles comportant des alcanes et des molécules aromatiques substituées. notamment des xylènes. Ces réactions peuvent comprendre celles qui peuvent être effectuées en présence d'hydrogène. Les compositions de catalyseurs contenant de la zéolithe IM-5 qui sont particulièrement utiles dans les réactions d'isomérisation comprennent celles dans lesquelles la zéolithe IM-5 se présente sous sa forme acide (H), sous la forme obtenue après échange de cations, sous sa forme contenant des métaux ou dans des combinaisons des formes précitées. Les formes dans lesquelles le métal est un composant d'hydrogénation/déshydrogénation tel que Ni, Co, Pt, Pd, Re ou Rh s'avèrent particulièrement utiles.

Les réactions d'isomérisation particulières dans lesquelles un catalyseur contenant de la zéolithe IM-5 peut se révéler utile comprennent l'isomérisation et l'hydro-isomérisation de xylènes, ou de paraffines. notamment des hydrocarbures normaux de C₄ à C₁₀, ou l'isomérisation d'oléfines et le déparaffinage catalytique.

L'isomérisation et l'hydro-isomérisation du xylène peuvent être effectuées en phase liquide ou en phase vapeur. En phase liquide, les conditions d'isomérisation appropriées comportent une température comprise entre 0 et 350°C, une pression comprise entre 0,1 et 20 MPa (absolus), de préférence entre 0,5 et 7 MPa (absolus), et dans le cas de la mise en oeuvre d'un régime dynamique, un poids de catalyseur par poids par heure (PPH) de préférence compris entre 1 et 30 h⁻¹ sur la base de la composition totale du catalyseur. Un diluant peut éventuellement être présent, de préférence l'un ou plusieurs de ceux présentant une température critique supérieure aux conditions d'isomérisation mises en oeuvre. Le diluant, si l'on en utilise un, peut comporter de 1 à 90 % en poids de la charge. Les réactions d'isomérisation et d'hydro-isomérisation du xylène en phase vapeur sont effectuées à une température comprise de manière appropriée entre 100 et 600°C, de préférence entre 200 et 500°C, à une pression comprise entre 0,05 et 10 MPa (absolus), de préférence entre 0,1 et 5 MPa (absolus), et à une valeur de poids de catalyseur par poids par heure (PPH) pouvant aller jusqu'à 80 sur la base de la composition totale du catalyseur.

Lorsque l'isomérisation du xylène est réalisée en présence d'hydrogène (en phase vapeur), le composant d'hydrogénation/déshydrogénation utilisé de préférence est le Pt ou le Ni. Le composant d'hydrogénation/déshydrogénation est généralement ajouté dans une proportion comprise entre 0,5 et 2 % en poids total de catalyseur. Des métaux et/ou des oxydes métalliques supplémentaires peuvent être présents dans la composition du catalyseur.

Dans l'isomérisation du xylène, de l'éthylbenzène peut être présent dans la charge de xylène dans une proportion pouvant atteindre 40 % en poids. Avec des compositions de catalyseur comportant de la zéolithe IDA-5 l'éthylbenzène subit généralement une transalkylation avec lui-même et avec les xylènes pour former des composés aromatiques plus lourds et plus légers. L'éthylbenzène réagit généralement également pour former du benzène et du gaz léger. notamment à des températures supérieures à 400°C. Avec de telles charges de xylène contenant de l'éthylbenzène, lorsque la réaction est conduite en présence d'hydrogène avec une composition catalytique comprenant de la zéolithe IM-5 et un composant d'hydrogénation/déshydrogénation, une certaine partie de l'éthylbenzène est transformée par isomérisation en xylènes. Il peut également être avantageux de conduire les réactions d'isomérisation de xylène en présence d'un composé hydrocarboné. notamment une paraffine ou un naphtène, avec ou sans la présence complémentaire d'hydrogène. L'hydrocarbure semble améliorer les performances du catalyseur dans la mesure où les réactions qui entraînent la perte de xylènes sont supprimées et, notamment lorsque les réactions sont conduites en l'absence d'hydrogène, la vie du catalyseur est augmentée.

La présente invention concerne en outre un procédé de conversion d'hydrocarbures dans lequel on met en contact un ou plusieurs composés aromatiques alkylés dans des conditions de transalkylation, en phase vapeur ou en phase liquide, avec un catalyseur contenant de la zéolithe IM-5.

Les catalyseurs contenant de la zéolithe IM-5 sont particulièrement utiles dans les réactions de transalkylation et/ou de dismutation, notamment dans les réactions impliquant des molécules aromatiques mono-, di-, tri- et tétrasubstituées par l'alkyle, notamment le toluène et les xylènes.

Les compositions de catalyseurs contenant de la zéolithe IM-5 qui s'avèrent particulièrement utiles dans le cadre de réactions de transalkylation et/ou de dismutation incluent les compositions dans lesquelles le composant IM-5 se présente sous sa forme acide (H+), sa forme obtenue par échange de cations, ou d'autres formes contenant des métaux ou des combinaisons de ces différentes formes. La forme acide et les formes dans lesquelles le métal est un composant d'hydrogénation/déshydrogénation tel que Ni, Co, Pt, Pd, Re ou Rh sont particulièrement efficaces.

On peut citer comme exemple particulier de procédés importants la dismutation du toluène et la réaction du toluène avec des composés aromatiques comportant au moins 9 atomes de carbone par molécule, par exemple les triméthylbenzènes.

La dismutation du toluène peut être conduite en phase vapeur, en présence ou en l'absence d'hydrogène, bien qu'il soit préférable d'opérer en présence d'hydrogène dans la mesure où celui-ci contribue à supprimer la désactivation du catalyseur. Les conditions de réaction les plus favorables sont les suivantes : températures comprises entre 250 et 650°C, ce préférence entre 300 et 550°C; pressions comprises entre 0,03 et 10 MPa (absolus), de préférence entre 0,1 et 5 MPa (absolus); poids par poids par heure (PPH) jusqu'à 50 (sur la base de la composition totale du catalyseur).

Lorsque la dismutation du toluène est conduite en présence d'hydrogène, le catalyseur peut éventuellement contenir un composant d'hydrogénation/ déshydrogénation. On utilisera de préférence un composant d'hydrogénation/ déshydrogénation tel que Pt, Pd ou Ni. Le composant d'hydrogénation/ déshydrogénation est normalement ajouté à une concentration pouvant atteindre 5 % en poids de la composition totale du catalyseur. Des métaux et/ou des oxydes métalliques complémentaires peuvent être présents dans la composition du catalyseur, par exemple jusqu'à 5 % en poids de la composition totale du catalyseur.

La présente invention concerne également un procédé de conversion d'hydrocarbures dans lequel on met en contact un composé oléfinique ou aromatique avec un composé alkylant approprié dans des conditions d'alkylation, en phase vapeur ou en phase liquide, avec un catalyseur contenant de la zéolithe IM-5.

Parmi les réactions d'alkylation pour lesquelles les catalyseurs contenant de la zéolithe IM-5 sont particulièrement utiles, on peut citer l'alkylation du benzène ou de molécules aromatiques substituées avec du méthanol ou une oléfine ou de l'éther. Parmi les exemples spécifiques de tels procédés, on citera la méthylation du toluène, la synthèse de l'éthylbenzène et la formation de l'éthyltoluène et du cumène. Les catalyseurs d'alkylation utilisés dans les procédés selon ce mode de réalisation de l'invention peuvent comporter d'autres substances, notamment des oxydes métalliques qui peuvent améliorer les performances catalytiques.

Grâce à l'utilisation d'un catalyseur contenant de la zéolithe IM-5, des hydrocarbures peuvent être produits en conduisant des réactions d'oligomérisation, de cyclisation et/ou d'aromatisation sur des composés insaturés tels que l'éthène, le propène ou le butène, ou sur des composés saturés tels que le propane ou le butane ou sur des mélanges d'hydrocarbures tels que des naphtas légers. Pour certaines réactions, notamment les réactions d'aromatisation, il peut être utile que le catalyseur contienne un métal ou un oxyde métallique, notamment du platine, du gallium, du zinc ou leurs oxydes.

Les catalyseurs contenant de la zéolithe IM-5 sont utiles pour une large gamme de réactions de craquage, parmi lesquelles le craquage d'oléfines, de paraffines ou d'aromatiques, ou encore de leurs mélanges. L'utilisation de la zéolithe IM-5 comme additif de catalyseur de craquage catalytique fluide est particulièrement utile pour améliorer le produit de la réaction de craquage. La zéolithe IM-5 peut également être utilisée comme composant d'un catalyseur pour le déparaffinage catalytique dans le cadre de procédés d'hydrocraquage.

Les procédés d'hydrogénation et/ou de déshydrogénation, par exemple la déshydrogénation d'alcanes en oléfines correspondantes, sont conduits de manière efficace en mettant en contact la charge appropriée, dans des conditions adaptées, avec un catalyseur contenant de la zéolithe IM-5, notamment lorsque cette dernière comporte aussi un composant d'hydrogénation/déshydrogénation tel que Ni, Co, Pt, Pd, Re ou Ru.

Un catalyseur contenant de la zéolithe IM-5 est également un catalyseur utile pour la formation d'éthers. notamment par la réaction de deux alcools ou par la réaction d'une oléfine avec un alcool.

L'invention est illustrée au moyen des exemples suivants.

### Exemple 1 : Synthèse de zéolithe IM-5 avec le pentane-1,5-bis(méthylpyrrolidinium) bromure (PentPyrr). La structure du pentane-1,5-bis(méthylpyrrolidinium) bromure est la suivante :

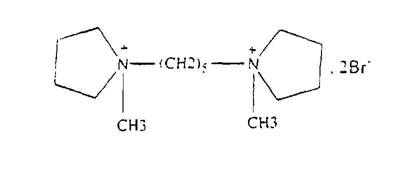

On verse 38 g d'eau dans un mélange solide contenant 3,6 g de silice Aérosil 130, 4,08 g de PentPyrr et 0,144 g de germes de zeolite NU88 calcinée (obtenu par broyage d'un échantillon d'une synthèse prédédente). On agite jusqu'à obtention d'un mélange homogène puis on ajoute, toujours sous agitation une solution obtenue par dissolution de 0,32 g d'aluminate de sodium Carlo Erba (54% Al₂O₃, 37% Na₂O), et 1,22 g de soude (NaOH) dans 20 g d'eau. Ce gel est agité 15 minutes avant d'être transféré dans un autoclave muni d'une gaine en PTFE (polytetrafluoroéthylène).

La composition molaire du gel correspond à :
60 SiO₂, 1,70 Al₂O₃, 18 Na₂O, 10 PentPyrr, 3000 H₂O.

L'autoclave est chauffé pendant 8 jours à 170°C dans une étuve dans des conditions statiques. Après filtration, lavage H₂0 et séchage à 60°C, on obtient 2,95 g de produit.

L'analyse du Si, Al et Na dans le produit a été effectuée par spectroscopie d'émission atomique.
On a trouvé la composition atomique suivante :
100SiO₂ : 4,0 Al₂O₃ : 0,144Na₂O

Le produit solide séché a été analysé par diffraction X de poudres et identifié comme étant constitué de zéolithe IM-5. le diagramme obtenu est conforme aux résultats présentés au tableau 1. Le diffractogramme est donné dans la figure 1 [en ordonnée l'intensité I (unité arbitraire) et en abscisse 2 θ (Cu K alpha)].

La surface spécifique du produit IM-5 a été déterminée après calcination à 550°C sous air sec durant 4 heures, et est trouvée égale à 530 m2/g. Le produit H-IM5 obtenu a un diffractogramme qui est donné dans la figure 2 1 (en ordonnée l'intensité I (unité arbitraire) et en abscisse 2 θ (Cu K alpha)].

### Exemple 2 : Synthèse de zéolithe IM-5 avec le pentane-1,5-bis(méthylpyrrolidinium) bromure (PentPyrr).

On utilise dans cet exemple le même mélange réactionnel que celui utilisé dans l'exemple 1. Cependant, l'autocalve est chauffé 8 jours à 170°C dans une étuve muni d'un dispositif permettant l'agitation de l'autoclave par rotation autour d'un axe perpendiculaire à l'axe du cylindre constitutif de l'autoclave, avec une vitesse de rotation de l'ordre de 10 tours/minute.

Après filtration, lavage H₂O et séchage à 60°C, on obtient 2,9 g de produit.

L'analyse du Si, Al et Na dans le produit a été effectuée par spectroscopie d'émission atomique. On a trouvé ia composition atomique suivante :
100SiO₂ : 4,3Al₂O₃ : 0,630Na₂O

Le produit solide séché a été analysé par diffraction X de poudres et identifié comme étant principalement constitué : de zéolithe IM-5, dont le diagramme obtenu est conforme aux résultats présentés au tableau 1 et minoritairement de ZSM-12, de l'ordre de 5% .

### Exemple 3 : Synthèse de zéolithe IM-5 avec l'hexane-1,6-bis(méthylpyrrolidinium) bromure (HexPyrr). La structure de l'hexane-1,6-bis(méthylpyrrolidinium) bromure est la suivante :

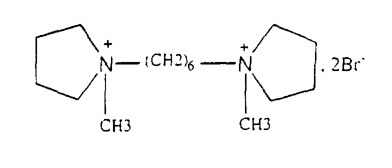

On utilise le même mélange réactionnel que celui de l'exemple 1, mais il n'y a pas ajout de germes de zéolithe NU-88 calcinée, la quantité d'aluminate de sodium Carlo Erba est de 0,281 g (au lieu de 0,32 g) et les 4,08 g de PentPyrr sont remplacés par 4,14 g d'HexPyrr.
La composition molaire du gel de synthèse correspond à :
60 SiO₂, 1,50 Al₂O₃, 18 Na₂O, 10 HexPyrr, 3000 H₂O

L'autoclave est chauffé à 160°C pendant 13 jours dans une étuve et agité par rotation selon un axe perpendiculaire à l'axe du cylindre de l'autoclave. Après filtration, lavage H₂0 et séchage à 60°C, on obtient 2,5 g de produit.

L'analyse du Si, Al et Na dans le produit a été effectuée par spectroscopie d'émission atomique.
On a trouvé la composition atomique suivante :
100SiO₂ : 3,79Al₂O₃ : 0,45Na₂O

Le produit solide séché a été analysé par diffraction X de poudres et identifié comme étant principalement constitué de zéolithe IM-5, le diagramme obtenu est conforme aux résultats présentés au tableau 1.

### Exemple 4 : Synthèse de zéolithe IM-5 avec le pentane-1,5-bis(méthylpyrrolidinium) bromure (PentPyrr).

On verse 38 g d'eau dans un mélange solide contenant 3,6 g de silice Aérosil 130, 4,08 g de PentPyrr. On agite jusqu'à obtention d'un mélange homogène puis on ajoute, toujours sous agitation une solution obtenue par dissolution de 0,289 g d'aluminate de sodium Carlo Erba (environ 54% Al₂O₃, 37% Na₂O), 0,618g de NaBr et 1,22 g de soude (NaOH) dans 20 g d'eau. Ce gel est agité 15 minutes avant d'être transféré dans un autoclave muni d'une gaine en PTFE (polytetrafluoroéthylène).

La composition molaire du gel correspond à :
60 SiO₂, 1,55 Al₂O₃, 18 Na₂O, 6 NaBr, 10 PentPyrr, 3000 H₂O.

L'autoclave est chauffé pendant 8,5 jours à 170°C dans une étuve dans des conditions statiques. Après filtration, lavage H₂0 et séchage à 60°C, on obtient 2,90 g de produit.

L'analyse du Si, Al et Na dans le produit a été effectuée par spectroscopie d'émission atomique.
On a trouvé la composition atomique suivante :
100SiO₂ : 3,8 Al₂O₃ : 0,132Na₂O

Le produit solide séché a été analysé par diffraction X de poudres et identifié comme étant constitué de zéolithe IM-5, le diagramme obtenu est conforme aux résultats présentés au tableau 1. Le diffractogramme est donné dans la figure 1 [en ordonnée l'intensité I (unité arbitraire) et en abscisse 2 θ (Cu K alpha)].

La surface spécifique du produit IM-5 a été déterminée après calcination à 550°C sous air sec durant 4 heures, et est trouvée égale à 545m2/g. Le produit H-IM5 obtenu a un diffractogramme qui est donné dans la figure 2 [en ordonnée l'intensité I (unité arbitraire) et en abscisse 2 θ (Cu K alpha)].

### Exemple 5 : Evaluation des propriétés catalytiques de la zéolithe H-IM-5 en craquage du méthylcyclohexane

1,2 g de zéolithe H-IM-5, préparée dans l'exemple 1, sont introduits dans un réacteur à lit fixe, tubulaire. La température du réacteur est portée à 500°C, puis le cyclohexane est introduit dans le réacteur. Le gaz diluant utilisé est de l'azote et le rapport molaire N2/cyclohexane admis dans le réacteur est de 12. La vitesse spatiale de méthylcyclohexane, c'est à dire la masse de méthylcyclohexane utilisé par par unité de masse de zéolithe H-IM-5 et par unité de temps est telle qu'elle permette d'obtenir une conversion de 60% poids. Les sélectivités pour les différents produits obtenus sont regroupés dans le tableau ci-après.

| Composés | Sélectivités (% poids) |
|---|---|
| Gaz (C1+C2+C3+C4) oléfines et paraffines | 58,0 |
| Composés C5-C6 | 10,6 |
| Composés en C7 isomères du méthylcyclohexane | 2,0 |
| Toluène + C8+(1) | 29,4 |

| | |
|---|---|
| (1) Composés comportant au moins 8 atomes de carbone | |

Cet exemple montre que la zéolithe H-IM-5 est suffisamment active pour conduire au craquage du méthylcyclohexane et conduit à une sélectivité en gaz (C1-C4) de 46,7% poids pour une conversion de 60% poids.

## Revendications

1. Zéolithe IM-5 de composition chimique exprimée sur une base anhydre, en termes de rapports molaires d'oxydes, par la formule :
100 XO₂, m Y₂O₃, p R_{2/n}O,
où
m est égal ou inférieur à 10,
p est compris entre 0 (exclu) et 20,
R représente un ou plusieurs cations de valence n,
X est le silicium et/ou le germanium,
Y est choisi dans le groupe formé par les éléments suivants : l'aluminium, le fer, le gallium, le bore et le titane, **caractérisée par le fait qu'**elle présente, sous forme brute de synthèse, un diagramme de diffraction X comportant les résultats présentés dans le tableau 1 suivant :
**Tableau 1 :**
| Tableau de diffraction des rayons X de la zéolithe IM-5 (brute de synthèse) | |
|---|---|
| dₕₖₗ (Å) | l/lₘₐₓ |
| 11,8±0,35 | F à TF(1) |
| 11,5±0,30 | F à TF(1) |
| 11,25±0,30 | Fà TF(1) |
| 9,95±0,20 | m à F |
| 9,50±0,15 | m à F |
| 7,08±0,12 | f à m |
| 6,04±0,10 | tf à f |
| 5,75±0,10 | f |
| 5,65±0,10 | f |
| 5,50±0,10 | tf |
| 5,35±0,10 | tf |
| 5,03±0,09 | tf |
| 4,72±0,08 | f à m |
| 4,55±0,07 | f |
| 4,26±0,07 | tf |
| 3,92±0,07 | F à TF (2) |
| 3,94±0,07 | TF (2) |
| 3,85±0,05 | TF (2) |
| 3,78±0,04 | F à TF (2) |
| 3,67±0,04 | m à F |
| 3,55±0,03 | m à F |
| 3,37±0,02 | f |
| 3,30±0,015 | f |
| 3,099±0,012 | f à m |
| 2,970±0,007 | tf à f |
| 2,815±0,005 | tf |
| 2,720±0,005 | tf |
| | |
|---|---|
| (1) Raies faisant partie du même massif, | |
| (2) Raies faisant partie du même massif. | |

2. Zéolithe selon la revendication 1 telle que m est compris entre 0,8 et 8.

3. Zéolithe de composition chimique exprimée sur une base anhydre, en termes de rapports molaires d'oxydes, par la formule
100 XO₂ : inférieur ou égal à 10 Y₂O₃ : compris entre 0 (exclu) et 10 M₂O,
où
X est le silicium et/ou le germanium,
Y est choisi dans le groupe formé par les éléments suivants : l'aluminium, le fer, le gallium, le bore, et le titane,
M est au moins un cation de métal alcalin (groupe IA de la Classification Périodique des Eléments) et/ou l'ammonium et/ou l'hydrogène, **caractérisé par le fait qu'**elle présente, sous forme calcinée, un diagramme de diffraction X comportant les résultats présentés dans le tableau 2 suivant :
**Tableau 2 :**
| Tableau de diffraction des rayons X de la zéolithe IM-5 (forme hydrogène) | |
|---|---|
| dₕₖₗ (Å) | l/lₘₐₓ |
| 11,8±0,30 | F à TF(1) |
| 11,45±0,25 | TF(1) |
| 11,20±0,20 | F à TF(1) |
| 9,90±0,15 | m à F |
| 9,50±0,15 | m à F |
| 7,06±0,12 | f à m |
| 6,01±0,10 | tf à f |
| 5,70±0,10 | f |
| 5,30±0,10 | tf |
| 5,03±0,09 | tf |
| 4,71±0,08 | f |
| 4,25±0,07 | tf |
| 3,87±0,07 | m à F (2) |
| 3,81±0,05 | m à F (2) |
| 3,76±0,04 | m à F (2) |
| 3,67±0,04 | f à m |
| 3,54±0,04 | m à F |
| 3,37±0,03 | f |
| 3,316±0,015 | f |
| 3,103±0,012 | f |
| 3,080±0,010 | f à m |
| 2,950±0,010 | tf à f |
| 2,880±0,007 | tf |
| 2,790±0,005 | tf |
| 2,590±0,005 | tf |
| | |
|---|---|
| (1) Raies faisant partie du même massif, | |
| (2) Raies faisant partie du même massif. | |

4. Zéolithe selon l'une des revendications 1 ou 2 ayant la composition chimique exprimée sur une base anhydre, en termes de rapports molaires d'oxydes suivante :
100 XO₂ : inférieur ou égal à 10 Y₂O₃ : inférieur ou égal à 10 Q : inférieur ou égal à 10 M₂O,
X est le silicium et/ou le germanium,
Y est choisi dans le groupe formé par les éléments suivants : l'aluminium, le fer, le gallium, le bore et le titane,
où M est au moins un cation de métal alcalin (groupe IA de la Classification Périodique des Eléments) et/ou l'ammonium, et Q est au moins un cation organique azoté ou un précurseur de cation organique azoté ou un produit de décomposition de cation organique azoté, au moins un des composés M ou Q étant présent.

5. Zéolithe selon la revendication 4 telle que :
Q est un cation de bis(méthyl pyrrolidinium), ou un de ses produits de décomposition ou un de ses précurseurs, de formule générale 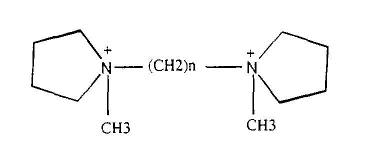 avec n = 5 ou 6.

6. Zéolithe selon l'une des revendications 4 ou 5 telle que Q est l'hexane-1,6-bis(méthylpyrrolidinium) bromure ou le pentane-1,5-bis(méthylpyrrolidinium) bromure.

7. Zéolithe selon l'une des revendications 1 à 6 telle que X est le silicium et Y est l'aluminium.

8. Zéolithe selon l'une des revendication 1, 2, 4, 5, 6 ou 7 au moins en partie sous forme H⁺ ou NH₄⁺ ou métallique, ledit métal étant choisi dans le groupe formé par les groupes IA, IB, IIA, IIB, IIIA, IIIB (y compris les terres rares), VIII, Sn, Pb et Si.

9. Procédé de préparation de la zéolithe selon l'une des revendications 1 à 8 dans laquelle on fait réagir un mélange aqueux comportant au moins une source d'au moins un oxyde XO₂, au moins une source d'au moins un oxyde Y₂O₃, éventuellement au moins une source d'au moins un oxyde M₂O et au moins un cation organique Q azoté, ou leurs précurseurs, et au moins un germe cristallin sélectionné dans le groupe constitué par le germe de la zéolithe NU-88 et le germe de la zéolithe IM-5, le mélange présentant généralement la composition molaire suivante :
XO₂/Y₂O₃ au moins 10,
(R1/n)OH/XO₂ de 0,01 à 2
H₂O/XO₂ de 1 à 400
Q/XO₂ de 0,01 à 1
L_{q}Z/XO₂ de 0 à 4
où
X est le silicium et/ou le germanium,
Y est choisi dans le groupe formé par les éléments suivants : aluminium, fer, bore, titane et gallium,
R est un cation de valence n qui comporte M (un cation de métal alcalin et/ou de l'ammonium), et/ou Q (un cation organique azoté ou un précurseur de celui-ci ou un produit de décomposition de celui-ci), et
L_{q}Z est un sel, Z étant un anion de valence q et L un ion de métal alcalin ou ammonium qui peut être similaire à M ou un mélange de M et d'un autre ion de métal alcalin ou un ion ammonium nécessaire pour équilibrer l'anion Z, Z pouvant comporter un radical acide ajouté par exemple sous la forme d'un sel de L ou d'un sel d'aluminium.

10. Procédé selon la revendication 9 tel que Q est un cation de bis(méthyl pyrrolidinium), ou un de ses produits de décomposition ou un de ses précurseurs, de formule générale 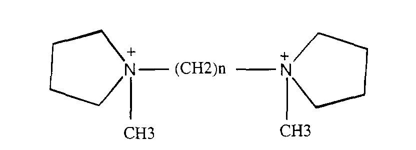 avec n = 5 ou 6.

11. Procédé selon l'une des revendications 9 ou 10 tel que le rapport (R1/n)OH/XO₂ est compris entre 0,1 et 0,75.

12. Procédé selon l'une des revendications 9 ou 10 tel que le rapport (R1/n)OH/XO₂ est compris entre 0,4 et 0,75.

13. Procédé selon l'une des revendications 9 à 12 tel que Q est l'hexane-1,6-bis (méthylpyrrolidinium) bromure ou le pentane-1,5-bis(méthylpyrrolidinium) bromure.

14. Procédé selon l'une des revendications 9 à 13 tel que le milieu aqueux comprend du sel L_{q}Z.

15. Procédé selon l'une des revendications 9 à 14 comprenant en plus une calcination.

16. Procédé de préparation selon l'une des revendications 9 à 15 comprenant en plus une étape d'échange de H⁺ ou de NH₄⁺.

17. Procédé selon l'une des revendications 9 à 16 comprenant en plus une étape d'échange de métal choisi dans le groupe formé par les groupes IA, IB, IIA, IIB, IIIA, IIIB (y compris les terres rares), VIII, Sn, Pb et Si.

18. Catalyseur comprenant une zéolithe selon l'une des revendications 1 à 8 ou préparée selon l'une des revendications 9 à 17.

19. Catalyseur selon la revendication 18 comprenant en outre un liant ou un support ou une autre zéolithe ou un métal choisi dans le groupe formé par les éléments Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Re et Rh.

20. Utilisation du catalyseur selon l'une des revendications 18 ou 19 dans un procédé de conversion d'hydrocarbures.

## Claims

1. A IM-5 zeolite with a chemical composition with the following formula, expressed in terms of the mole ratios of the oxides for the anhydrous state:
100XO₂, mY₂O₃, pR_{2/n}O
where
m is 10 or less;
p is in the range 0 (excluded) to 20;
R represents one or more cations with valency n;
X represents silicon and/or germanium;
Y is selected from the group formed by the following elements: aluminium, iron, gallium, boron, and titanium, **characterized in that** it has an X ray diffraction diagram, in its as synthesized state, which comprises the results shown in Table 1 below:
**TABLE 1:**
| **X ray diffraction table for IM-5 zeolite (as synthesized state)** | |
|---|---|
| dₕₖₗ (Å) | I/Iₘₐₓ |
| 11.8±0.35 | s to vs (1) |
| 11.5±0.30 | s to vs (1) |
| 11.25±0.30 | s to vs (1) |
| 9.95±0.20 | m to s |
| 9.50±0.15 | m to s |
| 7.08±0.12 | w to m |
| 6.04±0.10 | vw to w |
| 5.75±0.10 | w |
| 5.65±0.10 | w |
| 5.50±0.10 | vw |
| 5.35±0.10 | vw |
| 5.03±0.09 | vw |
| 4.72±0.08 | w to m |
| 4.55±0.07 | w |
| 4.26±0.07 | vw |
| 3.92±0.07 | s to vs (2) |
| 3.94±0.07 | vs (2) |
| 3.85±0.05 | vs (2) |
| 3.78±0.04 | s to vs (2) |
| 3.67±0.04 | m to s |
| 3.55±0.03 | m to s |
| 3.37±0.02 | w |
| 3.30±0.015 | w |
| 3.099±0.012 | w to m |
| 2.970±0.007 | vw to w |
| 2.815±0.005 | vw |
| 2.720±0.005 | vw |
| | |
|---|---|
| (1) Peaks forming part of the same feature. | |
| (2) Peaks forming part of the same feature. | |

2. A zeolite according to claim 1, in which m is in the range 0.8 to 8.

3. A zeolite with the following chemical composition, expressed in terms of the mole ratios of the oxides for the anhydrous state:
100X02: 10 or less Y₂O₃: in the range 0 (excluded) to 10 M₂O
where
X is silicon and/or germanium;
Y is selected from the group formed by the following elements:
aluminium, iron, gallium, boron and titanium; M is at least one alkali metal cation (group IA of the periodic table) and/or ammonium and/or hydrogen, **characterized in that** in its calcined form, it has an X ray diffraction diagram comprising the results shown in Table 2:
**TABLE 2:**
| **X ray diffraction table for IM-5 zeolite (hydrogen form), H-IM-5, obtained by calcining** | |
|---|---|
| dₕₖₗ (Å) | I/Iₘₐₓ |
| 11.8±0.30 | s to vs(1) |
| 11.45±0.25 | vs (1) |
| 11.20±0.20 | s to vs (1) |
| 9.90±0.15 | m to s |
| 9.50±0.15 | m to s |
| 7.06±0.12 | w to m |
| 6.01±0.10 | vw to w |
| 5.70±0.10 | w |
| 5.30±0.10 | vw |
| 5.03±0.09 | vw |
| 4.71±0.08 | w |
| 4.25±0.07 | vw |
| 3.87±0.07 | m to s (2) |
| 3.81±0.05 | m to s (2) |
| 3.76±0.04 | m to s (2) |
| 3.67±0.04 | w to m |
| 3.54±0.04 | m to s |
| 3.37±0.03 | w |
| 3.316±0.015 | w |
| 3.103±0.012 | w |
| 3.080±0.010 | w to m |
| 2.950±0.010 | vw to w |
| 2.880±0.007 | vw |
| 2.790±0.005 | vw |
| 2.590±0.005 | vw |
| | |
|---|---|
| (1) Peaks form part of the same feature. | |
| (2) Peaks form part of the same feature. | |

4. A zeolite according to claim 1 or claim 2, having the following chemical composition, expressed in terms of the mole ratios of the oxides for the anhydrous state:
100XO₂: 10 or less Y₂O₃: 10 or less Q: 10 or less M₂O,
where
X is silicon and/or germanium;
Y is selected from the group formed by the following elements: aluminium, iron, gallium, boron and titanium;
M is at least one alkali metal cation (group IA of the periodic table) and/or ammonium; and Q is at least one organic nitrogen-containing cation or a precursor of an organic nitrogen-containing cation or a decomposition product of an organic nitrogen-containing cation; at least one compound of type M or Q being present.

5. A zeolite according to claim 4, in which:
Q is a bis(methylpyrrolidinium) cation, or one of its decomposition products or one of its precursors, with general formula: 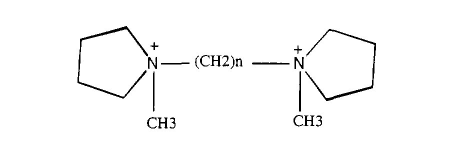 where n = 5 or 6.

6. A zeolite according to claim 4 or claim 5, in which Q is hexane-1,6-bis(methylpyrrolid-inium) bromide or pentane-1,5-bis(methylpyrrolidinium) bromide.

7. A zeolite according to any one of claims 1 to 6, in which X is silicon and Y is aluminium.

8. A zeolite according to any one of claims 1, 2, 4, 5, 6 or 7, at least partially in its H⁺ or NH₄⁺ or metallic form, said metal being selected from the group formed by groups IA, IB, IIA, IIB, IIIA, IIIB (including the rare earths), VIII, Sn, Pb and Si.

9. A process for the preparation of a zeolite according to any one of claims 1 to 8, in which an aqueous mixture comprising at least one source of at least one oxide XO₂, at least one source of at least one oxide Y₂O₃, optionally at least one source of at least one oxide M₂O, and at least one organic nitrogen-containing cation Q, or precursors thereof, and at least one crystalline seed selected in the group consisting of a NU-88 zeolite seed and a IM-5 zeolite seed are reacted, the mixture having the following molar composition:
XO₂/Y₂O₃ at least 10;
(R_{1/n})OH/XO₂ of 0.01 to 2;
H₂O/XO₂ of 1 to 500;
Q/XO₂ of 0.005 to 1;
L_{q}Z/XO₂ of 0 to 5;
where
X is silicon and/or germanium;
Y is selected from the group formed by the following elements: aluminium, iron, boron, titanium, and gallium;
R is a cation with valency n which comprises M (an alkali metal and/or ammonium cation) and/or Q (an organic nitrogen-containing cation or a precursor thereof or a decomposition product thereof);
L_{q}Z is a salt, Z being an anion with valency q and L an alkali metal ion or ammonium ion which may be similar to M or a mixture of M and a further alkali metal or ammonium ion required to balance anion Z, and Z may comprise an acid radical which is added, for example, in the form of a salt of L or an aluminium salt.

10. A process according to claim 9, in which Q is a bis(methylpyrrolidinium) cation or one of its decomposition products or one of its precursors, with general formula 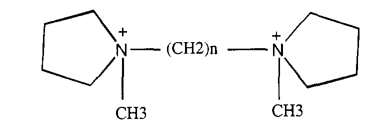 where n = 5 or 6.

11. A process according to any one of claims 9 to 10, in which the (R_{1/n})OH/XO₂ ratio is in the range 0.1 to 0.75.

12. A process according to any one of claims 9 to 10 in which the (R_{1/n})OH/XO₂ ratio is in the range 0.4 to 0.75.

13. A process according to any one of claims 9 to 12, in which Q is hexane-1,6-bis(methylpyrrolidinium) bromide or pentane-1,5-bis(methylpyrrolidinium) bromide.

14. A process according to any one of claims 9 to 13, in which the aqueous medium comprises a salt L_{q}Z.

15. A process according to any one of claims 9 to 14, further comprising a calcining step.

16. A preparation process according to any one of claims 9 to 15, further comprising a H⁺ or NH₄⁺ exchange step.

17. A process according to any one of claims 9 to 16, further comprising a step for exchanging a metal selected from the group formed by formed by groups IA, IB, IIA, IIB, IIIA, IIIB (including the rare earths), VIII, Sn, Pb and Si.

18. A catalyst comprising a zeolite according to any one of claims 1 to 8 or prepared according to any one of claims 9 to 17.

19. A catalyst according to claim 18, further comprising a binder or a support or a further zeolite or a metal selected from the group formed by the elements Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Re and Rh.

20. Use of a catalyst according to claim 18 or 19 in a hydrocarbon conversion process.

## Patentansprüche

1. IM-5 Zeolith einer chemischen Zusammensetzung, die auf wasserfreier Basis als Ausdruck molaren Verhältnissen der Oxide durch die folgende Formel ausgedrückt ist:
100 XO₂, m Y₂O₃, p R_{2/n}O,
wobei
m gleich oder kleiner 10 ist,
p zwischen 0 (ausgeschlossen) und 20 liegt,
R ein oder mehrere Kationen der Valenz n darstellt,
X Silizium und/oder Germanium ist,
Y in der Gruppe gewählt ist, die gebildet ist durch die folgenden Elemente: Aluminium, Eisen, Gallium, Bor und Titan, **gekennzeichnet durch** die Tatsache, dass er in Rohsyntheseform ein Röntgendiffraktogramm zeigt, das die in der folgenden Tabelle 1 dargestellten Ergebnisse zeigt:
**Tabelle 1:**
| Röntgendiffraktionstabelle des (Rohsynthese-) IM-5 Zeolithen | |
|---|---|
| dₕₖₗ (Å) | l/lₘₐₓ |
| 11,8±0,35 | F bis TF(1) |
| 11,8±0,35 | F bis TF(1) |
| 11,5±0,30 | F bis TF(1) |
| 11,25±0,30 | F bis TF(1) |
| 9,95±0,20 | m bis F |
| 9,50±0,15 | m bis F |
| 7,08±0,12 | f bis m |
| 6,04±0,10 | f bis f |
| 5,75±0,10 | f |
| 5,65±0,10 | f |
| 5,50±0,10 | tf |
| 5,35±0,10 | tf |
| 5,03±0,09 | tf |
| 4,72±0,08 | f bis m |
| 4,55±0,07 | f |
| 4,26±3,07 | tf |
| 3,92±0,07 | F bis TF (2) |
| 3,94±0,07 | TF (2) |
| 3,85±0,05 | TF (2) |
| 3,78±0,04 | F bis TF (2) |
| 3,67±0,04 | m bis F |
| 3,55±0,03 | m bis F |
| 3,37±0,02 | f |
| 3,30±0,015 | f |
| 3,099±0,012 | f bis m |
| 2,970±0,007 | tf bis f |
| 2,815±0,005 | tf |
| 2,720±0,005 | tf |
| | |
|---|---|
| (1) zum gleichen Massiv gehörende Banden, | |
| (2) zum gleichen Massiv gehörende Banden | |

2. Zeolith nach Anspruch 1, derart, dass m zwischen 0,8 und 8 liegt.

3. Zeolith einer chemischen Zusammensetzung, die auf wasserfreier Basis als Ausdruck von molaren Verhältnissen der Oxide durch die folgende Formel ausgedrückt ist:
100 XO₂: weniger oder gleich 10 Y₂O₃: zwischen 0 (ausgeschlossen) und 10 M₂O,
wobei
X Silizium und/oder Germanium ist,
Y in der Gruppe gewählt ist, die gebildet ist durch die folgenden Elemente: Aluminium, Eisen, Gallium, Bor und Titan,
M wenigstens ein Alkalimetallkation (Gruppe IA des Periodensystems der Elemente) und/oder Ammonium und/oder Wasserstoff ist, **gekennzeichnet durch** die Tatsache, dass er in kalzinierter Form ein Röntgendiffraktogramm zeigt, das die in der folgenden Tabelle 2 dargestellten Ergebnisse aufweist:
**Tabelle 2:**
| Röntgendiffraktionstabelle des (Wasserstoffform-) IM-5 Zeolithen | |
|---|---|
| dₕₖ (Å) | I/Iₘₐₓ |
| 11,8±0,30 | F bis TF(1) |
| 11,45±0,25 | TF(1) |
| 11,20±0,20 | F bis TF(1) |
| 9,90±0,15 | m bis F |
| 9,50±0.15 | m bis F |
| 7,06±0,12 | f bis m |
| 6,01±0.10 | tf bis f |
| 5,70±0,10 | f |
| 5,30±0,10 | tf |
| 5,03±0.09 | tf |
| 4,71±0,08 | f |
| 4,25±0,07 | tf |
| 3.87±0,07 | m bis F (2) |
| 3,81±0,05 | m bis F (2) |
| 3,76±0,04 | m bis F (2) |
| 3,67±0,04 | f bis m |
| 3,54±0,04 | m bis F |
| 3,37±0,03 | f |
| 3,316±0,015 | f |
| 3,103±0.012 | f |
| 3,080±0,010 | f bis m |
| 2,950±0,010 | tf bis f |
| 2,880±0,007 | tf |
| 2,790±0,005 | f |
| 2,590±0,005 | tf |
| | |
|---|---|
| (1) zum gleichen Massiv gehörende Banden, | |
| (2) zum gleichen Massiv gehörende Banden | |

4. Zeolith nach einem der Ansprüche 1 oder 2, der eine chemische Zusammensetzung auf wasserfreier Basis als Ausdruck der folgenden molaren Verhältnisse der Oxide hat:
100 XO₂: weniger oder gleich 10 Y₂O₃: weniger oder gleich 10 Q: weniger oder gleich 10 M₂O,
X ist Silizium und/oder Germanium,
Y ist in der Gruppe gewählt, die gebildet ist durch die folgenden Elemente: Aluminium, Eisen, Gallium, Bor und Titan ist,
wobei
M wenigstens ein Alkalimetallkation (Gruppe IA des Periodensystems der Elemente) und/oder Ammonium ist und Q wenigstens ein organisches stickstoffhaltiges Kation oder ein organischer stickstoffhaltiger Vorläufer oder ein Zersetzungsprodukt eines organischen stickstoffhaltigen Kations ist, wobei wenigstens eine der Verbindungen M oder Q vorhanden ist.

5. Zeolith nach Anspruch 4 derart, dass:
Q ein bis(Methyl-Pyrrolidinium)-Kation oder eines seiner Zersetzungsprodukte oder einer seiner Vorläufer ist, mit der allgemeinen Formel 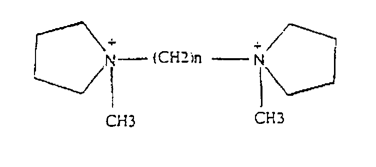 mit n=5 oder 6

6. Zeolith nach einem der Ansprüche 4 oder 5 derart, dass Q 1,6-bis(Methyl-Pyrrolidinium)-Hexan-Bromid oder 1,5-bis(Methyl-Pyrrolidinium)-Pentan-Bromid ist.

7. Zeolith nach einem der Ansprüche 1 bis 6 derart, dass X Silizium und Y Aluminium ist.

8. Zeolith nach einem der Ansprüche 1, 2, 4, 5, 6 oder 7, der wenigstens zum Teil in H⁺-, NH₄⁺- oder metallischer Form vorliegt, wobei das Metall aus der durch die Gruppen IA, IB, IIA, IIB, IIIA, IIIB (einschließlich der Seltenerden), VIII, Sn, Pb und Si gebildeten Gruppe gewählt ist.

9. Herstellungsverfahren für einen Zeolithen nach einem der Ansprüche 1 bis 8, bei dem man eine wässrige Mischung reagieren lässt, die wenigstens eine Quelle von wenigstens einem XO₂-Oxid, wenigstens einem Y₂O₃-Oxid, gegebenenfalls wenigstens einem M₂O-Oxid und wenigstens einem stickstoffhaltigen organischen Kation Q oder deren Vorläufer und wenigstens einen Kristallisationskeim umfasst, der in der durch die NU-88-Zeolithkeime und die IM-5-Zeolithkeime gebildeten Gruppe gewählt ist, wobei die Mischung die folgende molare Zusammensetzung aufweist:
XO₂/Y₂O₃ wenigstens 10,
(R1/n)OH/ XO₂ von 0,01 bis 2
H₂O/XO₂ von 1 bis 400
Q/ XO₂ von 0,01 bis 1
L_{q}Z/ XO₂ von 0 bis 4
wobei
X Silizium und/oder Germanium ist,
Y in der Gruppe gewählt ist, die gebildet ist durch die folgenden Elemente: Aluminium, Eisen, Bor, Titan und Gallium,
R ein Kation der Valenz n ist, das M umfasst (ein Alkalimetallkation und/oder Ammonium) und/oder Q (ein organisches stickstoffhaltiges Kation oder ein Vorläufer von diesem oder ein Zersetzungsprodukt von diesem) umfasst und
L_{q}Z ein Salz ist, wobei Z ein Anion der Valenz q ist, und L ein Alkalimetall- oder Ammoniumion, das ähnlich zu M sein kann, oder eine Mischung von M und einem anderen Alkalimetallion oder Ammoniumion ist, das nötig ist, um das Anion Z auszugleichen, wobei Z ein saures Radikal aufweisen kann, das z.B. in Form eines Salzes von L oder eines Salzes von Aluminium zugegeben wird.

10. Verfahren nach Anspruch 9 derart, Q ein bis(Methyl-Pyrrolidinium)-Kation oder eines seiner Zersetzungsprodukte oder einer seiner Vorläufer ist, mit der allgemeinen Formel 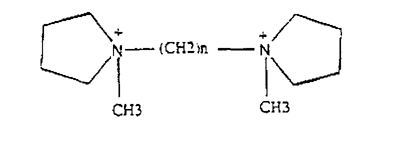 mit n=5 oder 6

11. Verfahren nach einem der Ansprüche 9 oder 10 derart, dass das Verhältnis (R1/n)OH/ XO₂ zwischen 0,1 und 0,75 liegt.

12. Verfahren nach einem der Ansprüche 9 oder 10 derart, dass das Verhältnis (R1/n)OH/ XO₂ zwischen 0,4 und 0,75 liegt.

13. Verfahren nach einem der Ansprüche 9 bis 12 derart, dass Q 1,6-bis(Methyl-Pyrrolidinium)-Hexan-Bromid oder 1,5-bis(Methyl-Pyrrolidinium)-Pentan-Bromid ist.

14. Verfahren nach einem der Ansprüche 9 bis 13 derart, dass das wässrige Milieu L_{q}Z-Salz umfasst.

15. Verfahren nach einem der Ansprüche 9 bis 14, das zusätzlich eine Kalzinierung umfasst.

16. Verfahren nach einem der Ansprüche 9 bis 15, das zusätzlich eine Stufe des Austauschs von H⁺ oder NH₄⁺ umfasst.

17. Verfahren nach einem der Ansprüche 9 bis 16, das zusätzlich eine Stufe des Austauschs eines Metalls umfasst, das in der Gruppe gewählt ist, die gebildet ist durch die Gruppen IA, IB, IIA, IIB, IIIA, IIIB (einschließlich der Seltenerden), VIII, Sn, Pb und Si.

18. Katalysator, der einen Zeolith nach einem der Ansprüche 1 bis 8 oder hergestellt nach einem der Ansprüche 9 bis 17, umfasst.

19. Katalysator nach Anspruch 18, der im übrigen ein Bindemittel oder einen Träger oder einen anderen Zeolithen oder ein Metall umfasst, das in der Gruppe gewählt ist, die gebildet ist durch die Elemente Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Re und Rh.

20. Verwendung eines Katalysators nach einem der Ansprüche 18 bis 19 in einem Umwandlungsverfahren von Kohlenwasserstoffen.
